# EUROPÄISCHE PATENTANMELDUNG

(11) **EP 1 925 687 A1**
(43) Veröffentlichungstag der Anmeldung: **28.05.2008**
(21) Anmeldenummer: 06024450.6
(22) Anmeldetag: 24.11.2006
(51) Int. Cl.: C23C 4/08, C23C 28/02, C22C 30/00

(54) **NiCoCrAI-Schicht und metallisches Schichtsystem**

(71) Anmelder: SIEMENS AKTIENGESELLSCHAFT, 80333 München (DE)
(72) Erfinder: Stamm, Werner, Dr., 45481 Mülheim an der Ruhr (DE)

(57) **Zusammenfassung**

NiCoCrAl-Schichten sind als Korrosionsschutzschichten aus dem Stand der Technik bekannt. Neben der Zusammensetzung, neben den Anteilen der Hauptlegierungselemente Nickel, Kobalt, Chrom sowie Aluminium wird das Korrosionsverhalten durch Zugabe von Korrosionsverbesserern, wie z.B. Yttrium bestimmt.

Erfindungsgemäß werden weitere Korrosionsverbesserer vorgeschlagen, die das Korrosionsschutzverhalten deutlich verbessern.

## Beschreibung

Die Erfindung betrifft eine metallische Schicht gemäß Anspruch 1 und ein metallisches Schichtsystem nach Anspruch 20.

Metallische Schichten werden oft zur Anbindung von keramischen Schichten an ein metallisches Substrat und/oder als Korrosions/Oxidations-Schutzschicht verwendet.

Dabei spielt die Ausbildung einer Oxidschicht auf der Metallschicht die entscheidende Rolle für die Anbindung der keramischen Schicht und für das Korrosions- und Oxidationsverhalten.

Die Oxidschicht muss dicht und fest sein, so dass durch die dichte Oxidschicht keine ohne möglichst geringe Oxidierenden oder korrodierenden Elemente mehr zum metallischen Substrat diffundieren können und eine hinreichende Festigkeit wird benötigt, damit die Oxidschicht nicht abplatzt und eine eventuell darauf befindliche keramische Schicht ebenfalls darauf haften bleiben kann.

Es ist daher Aufgabe der Erfindung oben genanntes Problem zu überwinden.

Die Aufgabe wird gelöst durch eine NiCoCrAl-Schicht gemäß Anspruch 1 oder ein metallisches Schichtsystem nach Anspruch 20.

Es zeigen:
- Figur 1: ein erfindungsgemäßes Schichtsystem mit einer metallischen Schicht,
- Figur 2: eine Gasturbine,
- Figur 3: perspektivisch eine Turbinenschaufel und
- Figur 4: perspektivisch eine Brennkammer.

Die metallische NiCoCrAl-Schicht enthält mindestens 1wt%, insbesondere maximal 5wt% von Cer (Ce), Tantal (Ta), Niob (Nb), Silizium (Si), Titan (Ti), Zirkon (Zr), Hafnium (Hf) oder RE (Seltenes Erdelement).
Das seltene Erdelement ist dabei insbesondere Yttrium (Y). Vorzugsweise enthält die NiCoCrAl-Schicht neben den seltenen Erdelementen mindestens 05.wt%, insbesondere 1wt% Cer (Ce), Tantal (Ta), Niob (Nb), Silizium (Si), Titan (Ti), Zirkon (Zr) oder Hafnium (Hf).

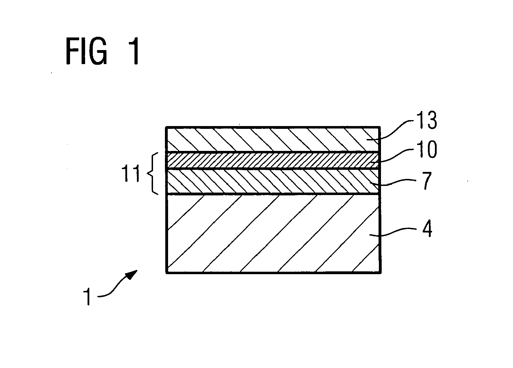

Figur 1 zeigt ein Schichtsystem 1 mit einer metallischen Schicht 11.

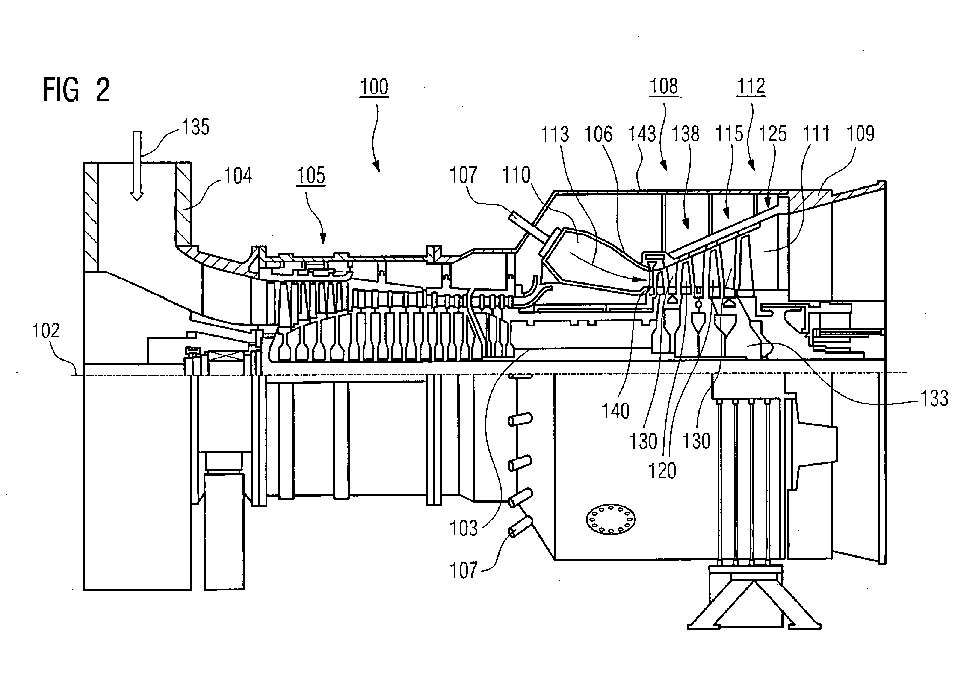

Die metallische Schicht 11 ist auf einem Substrat 4 aufgebracht, das insbesondere bei Bauteilen einer Gasturbine 100 (Fig. 2) aus nickel- oder kobaltbasierten Superlegierungen besteht.

Die metallische Schicht 11 kann als Overlay-Schicht (nicht dargestellt) oder als Anbindungsschicht verwendet werden, so dass in diesem Fall eine äußere keramische Schicht 13 auf der metallischen Schicht 11 vorhanden ist.
Die metallische Schicht 11 kann einlagig (Schicht 11 = innere Schicht 7 wie unten beschrieben) oder zweilagig (innere Schicht 7 und äußere Schicht 10) ausgeführt sein.

Auf der Oberfläche 15 der metallischen Schicht 11 bildet sich im Betrieb oder durch eine Voroxidation eine Oxidschicht (TGO) aus.

Die metallische Schicht 11 ist vorzugsweise zweilagig ausgebildet und besteht aus einer inneren metallischen Schicht 7 und einer äußeren metallischen Schicht 10 (NiCoCrAl-Schicht), wobei erfindungsgemäß die äußere metallische Schicht 10 zumindest eines der Elemente Cer (Ce), Tantal (Ta), Niob (Nb), Silizium (Si), Titan (Ti), Zirkon (Zr), Hafnium (Hf) oder RE (Seltenes Erdelement) als Korrosionsverbesserer enthält.

Diese Elemente könnten einzeln, zu zweit, zu dritt oder zu viert in der äußeren metallischen Schicht 10 verwendet werden, wobei der Mindestabstand vorzugsweise 0.5wt% zum Selten Erdelementanteil (RE) beträgt.
Der Gesamtanteil der Korrosionsverbesserer liegt bei zumindest 1wt%. Als Seltenes Erdelement (RE) wird zumindest Yttrium verwendet. Vorzugsweise wird als Seltenes Erdelement (RE) nur Yttrium verwendet.

Neben der Zugabe des Seltenen Erdelements enthält die NiCoCrAl-Schicht mindestens 0,5wt%, insbesondere 1wt% der Elemente Cer, Tantal, Niob, Silizium, Titan, Zirkon und/oder Hafnium.

Vorzugsweise betragen die Anteile von Silizium, Zirkon, Cer und/oder Hafnium 0,5wt%, insbesondere ≥1wt%.
Der maximale Anteil der Korrosionsverbesserer liegt bei 5wt%, insbesondere bei 2,5wt%.

Vorzugsweise ist die äußere metallische Schicht 10 dünner ausgebildet, als die innere metallische Schicht 7. Diese beträgt vorzugsweise < 100µm.

Die korrosionsverbesserenden Elemente (Si, Zr, Hf, Ce, Y, Ti, Nb, Ta) können in einer metallischen Schicht mit folgender Zusammensetzung (in wt%) vorhanden sein:
1. Co-(27 - 29)Ni-(23 - 25)Cr-(9 - 11)Al-(0.5 - 0.7)Y,
   insbesondere Co-28Ni-24Cr-10Al-0,6Y
2. Ni-(11 - 13) Co-(20 - 22) Cr-(10 - 12) Al-(0.3 - 0.5)Y-(1.5 - 2.5) Re,
   insbesondere Ni-12Co-21Cr-11Al-0,4Y-2Re
3. Ni-(24 - 26)Co-(16 - 18)Cr-(9 - 11)Al-(0.3 - 0.)Y-(1.0 - 2.5) Re,
   insbesondere Ni-25Co-17Cr-10Al-0,4Y-1,5 Re,
4. Ni-(27 - 29)Cr-(7 - 9)Al-(0.5 - 0.7)Y-(0.06 - 0.8) Si
   insbesondere Co-30Ni-28Cr-8Al-0,6Y-0.7Si.

Folgende Kombinationen der Korrosionsverbesserer sind bevorzugt:
- Y/Si
- Y/Zr
- Y/Ce
- Y/Al
- Y/Si/Zr
- Y/Si/Ce
- Y/Si/Hf
- Y/Zr/Ce
- Y/Zr/Hf
- Y/Ce/Hf
- Y/Si/Zr/Ce
- Y/Si/Zr/HF
- Y/Si/Ce/Hf
- Y/Zr/Ce/Hf.

Weitere Beispiele für Legierungen, denen vorzugsweise die Elemente Silizium, Zirkon, Cer, Hafnium oder Yttrium beigefügt werden, sind zum einen ein System aus β-NiAl mit Beimengen von Chrom und/oder Kobalt, wobei die β-NiAl-Phase nicht zerstört wird oder eine Legierung, die nur die γ-Ni-Phase aufweist.

Diese NiCoCrAl-Schicht kann vorzugsweise in einem metallischen Schicht-System verwendet werden. Dabei werden vorzugsweise für die innere Schicht 7 verwendet:
1. Co-(27 - 29)Ni-(23 - 25)Cr-(9 - 11)Al-(0.5 - 0.7)Y,
   insbesondere Co-28Ni-24Cr-10Al-0,6Y
2. Ni-(11 - 13) Co-(20 - 22) Cr-(10 - 12) Al-(0.3 - 0.5)Y-(1.5 - 2.5) Re,
   insbesondere Ni-12Co-21Cr-11Al-0,4Y-2Re
3. Ni-(24 - 26)Co-(16 - 18)Cr-(9 - 11)Al-(0.3 - 0.)Y-(1.0 - 2.5) Re,
   insbesondere Ni-25Co-17Cr-10Al-0,4Y-1,5 Re,
4. Ni-(27 - 29)Cr-(7 - 9)Al-(0.5 - 0.7)Y-(0.06 - 0.8) Si
   insbesondere Co-30Ni-28Cr-8Al-0,6Y-0.7Si.

Die innere Schicht 7 weist vorzugsweise eine Zusammensetzung dieser vier Beispiele auf. Vorzugsweise besteht sie aus einer der vier Zusammensetzungen.
Für die äußere Schicht 10 können ebenfalls die vier o. g. Legierungszusammensetzungen verwendet werden, die jedoch die o. g. Korrosionsverbesserer als zusätzliche Elemente aufweisen.
Die innere Schicht 7 weist vorzugsweise keinen Korrosionsverbesserer oder nur Yttrium als Korrosionsverbesserer auf.

Vorzugsweise ist der Gesamtanteil der Korrosionsverbesserer in der inneren Schicht 7 kleiner als in der äußeren Schicht 10.

Die Figur 2 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

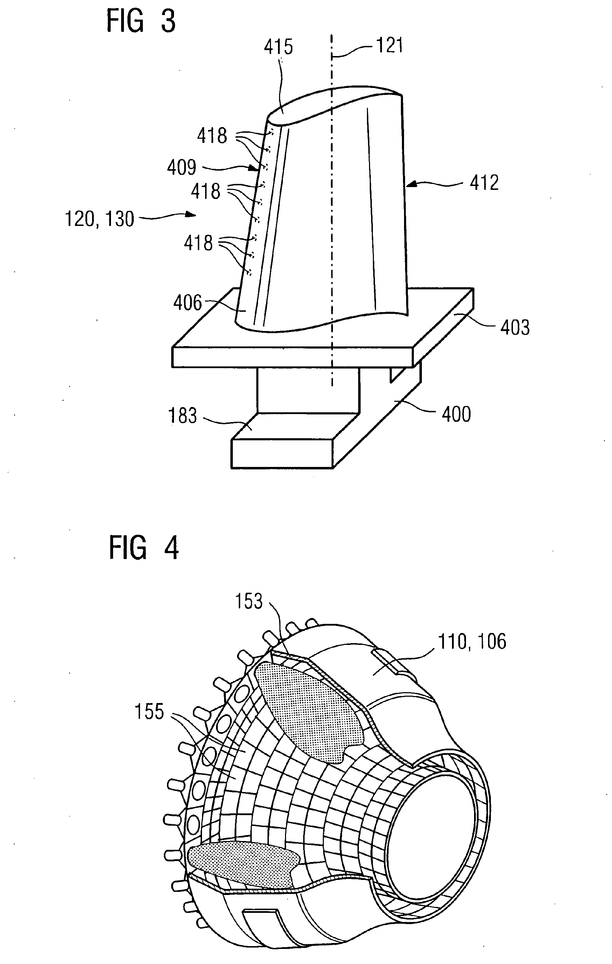

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. MCrAlX gemäß der Erfindung (M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also beispielsweise MCrAlX, insbesondere gemäß der Erfindung: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. NiCoCrAl-Schicht (10),
die mindestens 1wt% und insbesondere maximal 5wt% Cer (Ce), Tantal (Ta), Niob (Nb), Silizium (Si), Titan (Ti), RE (Selten Erdelement), Zirkon (Zr) und/oder Hafnium (Hf)
als Korrosionsverbesserer enthält.

2. NiCoCrAl-Schicht nach Anspruch 1,
die zumindest Yttrium (RE) enthält.

3. NiCoCrAl-Schicht nach Anspruch 1,
die nur Yttrium als RE enthält.

4. NiCoCrAl-Schicht nach Anspruch 1, 2 oder 3,
die neben RE (Seltenen Erdelement) mindestens 0.5wt%, insbesondere mindestens 1wt%,
Cer (Ce), Tantal (Ta), Niob (Nb), Silizium (Si), Titan (Ti), Zirkon (Zr) und/oder Hafnium (Hf) enthält.

5. NiCoCrAl-Schicht nach Anspruch 1, 2, 3 oder 4,
für die zumindest die Zusätze von Silizium (Si), Zirkon (Zr), Cer (Ce), Hafnium (Hf) und/oder Yttrium (Y) verwendet werden,
insbesondere werden nur die Zusätze Silizium, Zirkon, Cer, Hafnium und/oder Yttrium verwendet.

6. NiCoCrAl-Schicht nach Anspruch 1, 2, 3, 4 oder 5, deren Anteile von Silizium (Si), Zirkon (Zr), Cer (Ce) und/oder Hafnium (Hf) ≥ 0.5wt%,
insbesondere ≥ 1wt% betragen.

7. NiCoCrAl-Schicht nach Anspruch 1 oder 6,
die nur Silizium (Si) als Korrosionsverbesserer aufweist.

8. NiCoCrAl-Schicht nach Anspruch 1 oder 6,
die nur Zirkon (Zr) als Korrosionsverbesserer aufweist.

9. NiCoCrAl-Schicht nach Anspruch 1 oder 6,
die nur Cer (Ce) als Korrosionsverbesserer aufweist.

10. NiCoCrAl-Schicht nach Anspruch 1 oder 6,
die nur Hafnium (Hf) als Korrosionsverbesserer aufweist.

11. NiCoCrAl-Schicht nach Anspruch 1, 3, 4, 5 oder 6,
die nur Yttrium (Y) und Silizium (Si) als Korrosionsverbesserer aufweist.

12. NiCoCrAl-Schicht nach Anspruch 1, 3, 4, 5 oder 6,
die nur Yttrium (Y) und Cer (Ce) als Korrosionsverbesserer aufweist.

13. NiCoCrAl-Schicht nach Anspruch 1, 3, 4, 5 oder 6,
die nur Yttrium (Y) und Zirkon (Zr) als Korrosionsverbesserer aufweist.

14. NiCoCrAl-Schicht nach Anspruch 1, 3, 4, 5 oder 6,
die nur Yttrium (Y), Silizium (Si) und Zirkon (Zr) als Korrosionsverbesserer aufweist.

15. NiCoCrAl-Schicht nach Anspruch 1, 2, 3, 4, 5, 11, 12, 13 oder 14,
deren Anteil an RE mindestens 0.3wt% beträgt, und
insbesondere ≤ 1wt% beträgt.

16. NiCoCrAl-Schicht nach einem oder mehreren der vorherigen Ansprüche,
die (in wt%) Ni-(24 - 26)Co-(16 - 18)Cr-(9 - 11)Al-(0.3 - 0.)Y-(1.0 - 2.5) Re (Rhenium),
insbesondere Ni-25Co-17Cr-10Al-0,4Y-1,5Re aufweist.

17. NiCoCrAl-Schicht nach einem oder mehreren der vorherigen Ansprüche,
die (in wt%) Ni-(11 - 13)Co-(20 - 22)Cr-(10 - 12)Al-(0.3 - 0.5)Y-(1.5 - 2.5) Re (Rhenium),
insbesondere Ni-12Co-21Cr-11Al-0,4Y-1,5Re (in wt%) aufweist.

18. NiCoCrAl-Schicht nach einem oder mehreren der vorherigen Ansprüche,
die (in wt%) Co-(27 - 29)Ni-(23 - 25)Cr-(9 - 11)Al-(0.5 - 0.7)Y,
insbesondere Co-28Ni-24Cr-10Al-0,6Y aufweist.

19. NiCoCrAl-Schicht nach einem oder mehreren der vorherigen Ansprüche,
die (in wt%) Co-(29 - 31) Ni-(27 - 29)Cr-(7 - 9)Al-(0.5 - 0.7)Y-(0.06 - 0.8) Si
insbesondere Co-30Ni-28Cr-8Al-0,6Y-0.7Si aufweist.

20. Metallisches Schichtsystem,
aufweisend
eine innere metallische Schicht (7),
insbesondere eine MCrAl-Schicht, und
eine äußere metallische Schicht (10) nach einem oder
mehreren der vorherigen Ansprüche.

21. Metallisches Schichtsystem nach Anspruch 20,
deren äußere Schicht (10) dünner ist als die innere Schicht (7),
insbesondere um 10% dünner ist,
insbesondere um 30% dünner ist.

22. Metallisches Schichtsystem nach Anspruch 20 oder 21, deren innere Schicht (7) aus einer MCrAlX-Legierung besteht.

23. Metallisches Schichtsystem nach Anspruch 20, 21 oder 22, dessen innere Schicht (7) (in wt%)
Co-(27 - 29)Ni-(23 - 25)Cr-(9 - 11)Al-(0.5 - 0.7)Y,
insbesondere Co-28Ni-24Cr-10Al-0,6Y aufweist,
insbesondere aus
Co-(27 - 29)Ni-(23 - 25) Cr- (9 - 11)Al-(0.5 - 0.7)Y besteht,
insbesondere aus Co-28Ni-24Cr-10Al-0,6Y besteht.

24. Metallisches Schichtsystem nach Anspruch 20, 21 oder 22, dessen innere Schicht (7) (in wt%)
Ni-(11 - 13)Co-(20 - 22)Cr-(10 - 12)Al-(0.3 - 0.5)Y-(1.5 - 2.5)Re,
insbesondere Ni-12Co-21Cr-11Al-0,4Y-2Re aufweist,
insbesondere aus
Ni-(11 - 13)Co-(20 - 22)Cr-(10 - 12)Al-(0.3 - 0.5)Y-(1.5 - 2.5)Re besteht,
insbesondere aus Ni-12Co-21Cr-11Al-0,4Y-2Re besteht.

25. Metallisches Schichtsystem nach Anspruch 20, 21 oder 22, dessen innere Schicht (7) (in wt%)
Ni-(24 - 26)Co-(16 - 18)Cr-(9 - 11)Al-(0.3 - 0.4)Y-(1.0 - 2.5)Re,
insbesondere Ni-25Co-17Cr-10Al-0,4Y-1,5Re aufweist,
insbesondere aus
Ni-(24 - 26)Co-(16 - 18)Cr-(9 - 11)Al-(0.3 - 0.4)Y-(1.0 - 2.5)Re besteht,
insbesondere aus Ni-25Co-17Cr-10Al-0,4Y-1,5Re besteht.

26. Metallisches Schichtsystem nach Anspruch 20, 21 oder 22, dessen innere Schicht (7) (in wt%)
Co-(29 - 31)Ni-(27 - 29)Cr-(7 - 9)Al-(0.5 - 0.7)Y-(0.06 - 0.8)Si,
insbesondere Co-30Ni-28Cr-8Al-0,6Y-0.7Si aufweist,
insbesondere aus Co-(29 - 31)Ni-(27 - 29)Cr-(7 - 9)Al-(0.5 - 0.7)Y-(0.06 - 0.8)Si besteht,
insbesondere aus Co-30Ni-28Cr-8Al-0,6Y-0.7Si besteht.

27. Metallisches Schichtsystem nach einem oder mehreren der vorherigen Ansprüche,
mit metallischer Schicht (10) nach einem oder mehreren der Ansprüche 1 bis 19,
die Yttrium aufweist,
bei der der Yttriumgehalt der äußeren Schicht (10) ausgehend von der Zusammensetzung der inneren Schicht (7) um mindestens 0.45wt% erhöht ist,
insbesondere mindestens um 1wt%,
wobei insbesondere nur Yttrium (Y) als Korrosionsverbesserer verwendet wird.

28. Metallisches Schichtsystem nach einem oder mehreren der vorherigen Ansprüche,
die ein Element als Korrosionsverbesserer in der metallischen Schicht (7) aufweist,
deren Anteil jedoch geringer,
insbesondere um mindestens 10%,
ist als in der äußeren metallischen Schicht (10).

29. Metallisches Schichtsystem nach einem oder mehreren der vorherigen Ansprüche,
die kein Korrosionsverbesserer oder nur Yttrium als Korrosionsverbesserer in der metallischen Schicht (7) aufweist.

30. Metallisches Schichtsystem nach einem oder mehreren der vorherigen Ansprüche, bestehend aus
einer inneren metallischen Schicht (7),
insbesondere einer MCrAl-Schicht, und
einer äußeren metallischen Schicht (10) nach einem oder mehreren der Ansprüche 1 bis 19.
